# EUROPEAN PATENT SPECIFICATION

(11) **EP 4 316 900 B1**
(45) Date of publication and mention of the grant of the patent: **26.02.2025**
(21) Application number: 22188917.3
(22) Date of filing: 05.08.2022
(51) Int. Cl.: B60L 50/64, B60L 58/24, H01M 50/227, H01M 50/231, H01M 50/24, H01M 50/249, H01M 50/278, D04H 1/4218, D04H 1/587, D04H 1/64, H01M 10/052

(54) **FLAME SHIELD FOR A BATTERY OF AN ELECTRIC VEHICLE AND BATTERY HOUSING COMPRISING IT**
FLAMMENSCHILD FÜR EINE BATTERIE EINES ELEKTROFAHRZEUGS UND BATTERIEGEHÄUSE DAMIT
PARE-FLAMMES POUR BATTERIE DE VÉHICULE ÉLECTRIQUE ET BOÎTIER DE BATTERIE LE COMPORTANT

(43) Date of publication of application: 07.02.2024
(73) Proprietor: Autoneum Management AG, 8406 Winterthur (CH)
(72) Inventor: Schürmann, Jeremias, 8005 Zürich (CH)

(56) References cited:
- WO-A1-2021/144758
- WO-A1-2022/024076
- JP-A- 2012 092 484
- US-A1- 2002 119 719
- US-A1- 2019 348 653

## Description

### Technical Field

The invention relates to a flame shield for an electric vehicle battery and to a method for manufacturing it. Further, the invention relates to a battery housing comprising such a flame shield.

### Background Art

An electric vehicle is generally powered by a rechargeable battery, which provides the electric power needed to drive the electric motor or the electric motors used to propel the vehicle itself. An electric battery generally consists of a number of electrically connected battery cells, possibly organized in battery modules.

Among the different types of rechargeable batteries, lithium-ion batteries, in particular, are widely used in electric vehicles because of their high energy density which, for a given battery weight, may guarantee a longer driving range.

In an electric vehicle, the battery is normally installed in the region underneath the vehicle body. Typically, it is enclosed within a battery case consisting of a lower shell, hereafter referred to as battery tray, on which the battery sits and an upper shell, hereafter referred to as battery cover or battery lid, which encases the battery from above. Typically, the battery case, in particular the battery cover, is made with a metallic material. Aluminium is very commonly used for this purpose because of its advantageous stiffness/weight ratio.

In some cases, the battery may be enclosed between the vehicle body floor and a battery tray that is directly fixed to the vehicle body and on which the battery sits. In these cases, it is the vehicle body floor, typically made with aluminium or steel, which acts as battery cover.

Rechargeable batteries for traction of electric vehicles, in particular lithium-ion batteries, may raise important safety concerns. In case of mechanical abuse (e.g. impact, piercing) and/or thermal abuse (e.g. over-heating) and/or electrical abuse (e.g. over-charging), short-circuits can occur inside one or more battery cells, which may lead to exothermic decomposition of their chemical constituents. This leads to a strong increase in their temperature, which may propagate to nearby battery cells, in turn over-heating them and generating a cascade effect known as "thermal runaway ".

During thermal runaway, very high temperatures may be generated in a very short time inside the battery and the chemical constituents of the battery cells may catch fire, ultimately leading, in extreme cases, also to explosions. In particular, thermal runaway in lithium-ion batteries can generate flames with temperatures up to about 900°C. These temperatures are well-above the melting temperature of typical battery covers and/or vehicle body floor panels made, e.g., with aluminium.

Furthermore, as the battery ages, its sensitivity to thermal and electrical abuse increases and, with that, the risk of thermal runaway.

In the event of a thermal runaway, in order not to endanger the safety of the occupants of the passenger compartment, it is first of all of paramount importance that they are warned early enough to leave the passenger compartment before unbearable temperatures and/or flames reach it. For this purpose, Chinese standard GB 38031-2020 requires that the battery management system provides an alarm signal at least 5 minutes (the so called "time-to-escape") before the thermal propagation caused by a thermal runaway event (even of a single battery cell) occurs. In addition to this, in order to further protect the passenger compartment from high temperatures and/or fire during the above-mentioned "time-to-escape", a protective flame shield is typically applied on the battery cover and/or on the vehicle floor body panel, generally on the side facing the battery.

State of the art flame shields typically consist of a thin mica layer, which is adhered to the battery cover and/or to the vehicle body floor panel, on the side facing the battery. In fact, mica is a very effective flame shielding material, being its melting temperature around 1300°C. However, flame shields based on mica layer pose a number of problems.

Mica is a rather heavy material, having a density of between 2700kg/m³ and 3000kg/m³. Thus, flame shields comprising a layer of mica may be very heavy, with area weights ranging between 2.5kg/m² and 6kg/m², depending on the thickness of the mica layer. Such an area weight may be even higher than the area weight of the battery cover the flame shield is applied to. This is very detrimental to the driving range of the electric car, a feature that is very relevant for end-consumers interested in this kind of vehicles.

In addition to this, the production process of mica flame shields, when considered in its entirety, is extremely time consuming and industrially complex. Such process starts from the mining of mica, after which mica must be sorted and cleaned from all contaminants and transformed into a mica paper, which consists of very thin layers of mica flakes held together only by weak Van der Waal forces. This very delicate structure of mica paper makes its production difficult and strongly depending on critical parameters such as the composition of the chemical pulping and the distribution of the mica and of its area weight (the critical dependence of the mica paper production process on these parameters may reflect in the non-homogeneity of the resulting mica paper). From the industrial standpoint, a production process that is simpler in terms of materials sourcing and production steps and less critical in terms of definition of process parameters would be highly desirable.

Furthermore, flame shields comprising mica layers may be difficult to be moulded into strong three-dimensional shapes. This because of the brittleness of mica, which depends on its microscopic structure based on a layered crystal lattice, wherein octahedral aluminium layers alternate with tetrahedral silicon-oxide layers. Because of this microscopic structure, mica has a natural tendency to fracture, i.e. to break mainly along crystallographic lines or planes and cannot be easily formed along strong curvatures. This may be a problem in case the flame shield comprising a mica layer has to be applied on a battery cover (or on a vehicle body) which presents areas with a strong three-dimensional curvature and may even force not to apply the flame shield in such areas, to the detriment of the performance of the flame shield and to the safety of the occupants of the vehicle passenger compartment.

A mica-based flame shield for an electric vehicle battery is described in CN 114889221.

It is the object of the present invention to provide a flame shield for a battery of an electric vehicle that represents an alternative solution to mica layers according to the state of the art and that may overcome the above-mentioned weight, production process and performance issues.

### Summary of invention

The object of the invention is achieved by a flame shield for a battery of an electric vehicle according to claim 1, a method for producing such a flame shield according to claim 13, and a battery housing comprising such a flame shield according to claim 14.

In its main aspect, the invention concerns a flame shield for a battery of an electric vehicle, in particular a lithium-ion battery, comprising at least one flame-resistant layer consisting of a porous fibrous non-woven impregnated with polyurethane, wherein the fibers comprised in the porous fibrous non-woven have a melting temperature of at least 1100°C, wherein the polyurethane does not comprise any flame retardant and wherein the polyurethane impregnates the porous fibrous-non woven in such a way that the flame-resistant layer is impervious to air-flow.

Hereafter, an "electric vehicle" is any vehicle powered, even only partially, by an electric battery including, but not limited to, fully electric vehicles, hybrid vehicles, plug-in hybrid vehicles and vehicles equipped with a range extender.

A "layer" is a body consisting of one or more materials and filling the space between two closely spaced surfaces, wherein the distance between the surfaces is substantially smaller than their size. The two surfaces are indicated as the "sides" of the layer and they are opposite to each other. The distance between the two surfaces is referred to as the thickness of the layer, which may be variable. A layer may comprise other layers.

A layer impermeable to air-flow is meant to be a layer having an air permeance equal to or less than 0.02 l/sm² at 75 Pa pressure differential when tested according to ASTM E 2178 or E 283.

A "fibrous non-woven" is a random network of fibers bonded together by chemical, mechanical, thermal or solvent treatment. A "porous fibrous non-woven" is a fibrous non-woven wherein interstices are present in between the fibers. These interstices will be referred to hereafter as "pores".

Very surprisingly, it was found that simply by impregnating a porous fibrous non-woven with polyurethane it is possible to obtain a very effective flame-resistant layer suitable for use in flame shields for batteries of electric vehicles in order to mitigate the consequences of a thermal runaway and protect the passenger compartment during the time-to-escape. However, it was found that in order to obtain the desired flame resistance effect, the fibers comprised in the porous fibrous non-woven must be resistant to high temperatures, in particular they must have a melting temperature above 1100°C, and the polyurethane must impregnate the porous fibrous non-woven in such a way to make the resulting composite impervious to air-flow. Even more surprisingly, it was found that the flame-resistance effect could be obtained without the addition of any flame retardant in the polyurethane.

In its simplest embodiment, the flame shield according to the invention may consist of one single flame-resistant layer according to the invention. In another embodiment, the flame shield according to the invention may consist of two or more flame-resistant layers according to the invention, partially or totally overlapping each other. It is remarkable that in these embodiments, the flame shield according to the invention is very simple in terms of raw materials, materials sourcing and production process, compared to prior art solutions based on mica layers.

In more complex embodiments, the flame shield according to the invention may comprise also complementary layers, i.e. layers different from a flame-resistant layer according to the invention. Such layers may be comprised in the flame shield according to the invention to further enhance its flame shielding properties and/or for other purposes e.g. to enhance mechanical properties and/or improve workability during production or installation and/or improve appearance.

The polyurethane according to the invention is typically obtained from the reaction of a polyurethane forming mixture comprising polyol and isocyanate, which may be premixed just before application. The polyurethane forming mixture generally used in the process of the present invention will include: at least one polyol component with an average OH number of 300 to 900, the individual polyols having a functionality of 2 to 6; at least one isocyanate, preferably at least one of an isomer blend of methylene diphenyl diisocyanate (MDI), polymeric MDI, or prepolymers thereof; optionally a blowing agent, preferably water; one or more catalysts including amine-based and metal-based catalysts; surfactants or stabilizers; mould release agent and additives such as fillers, colorants, or rheology modifiers. Suitable polyols can be polyester or polyether based.

US808485 discloses preferred mixtures comprising an isocyanate component and a polyol component comprising one or more natural oil based polyols, which might be used with the invention according to this application. Other renewable sources such as starches, lignin, cellulose, or recycled polyester polyols might be used as well.

The porous fibrous non-woven may be in any form known in the art. Preferably, the weight of the porous fibrous non-woven is between 40% and 80% of the total weight of the flame-resistant layer according to the invention, preferably between 50% and 70%.

In a preferred embodiment, the porous fibrous non-woven according to the invention may comprise one or more porous fibrous layers, totally or partially overlapping each other. Each porous fibrous layer may be in any form known in the art including, but not limited to, a chopped-strand-mat, a knit, a weave or a non-crimped fabric.

The porous fibrous non-woven according to the invention may be obtained using any production method for porous fibrous non-wovens known in the art. The production method may comprise process steps such as carding, spun-bonding, melt-blowing, electro-spinning, lapping (e.g. vertically lapping, cross-lapping), needle punching, air-laying or wet-laying, or any combination thereof.

In a preferred embodiment, the porous fibrous non-woven comprises at least one fibrous layer whose fibers are bonded by means of a thermoset binder, which is preferably a phenol-based or an epoxy-based binder. The fibrous layer may comprise staple fibers or continuous filaments or a combination of both. The purpose of the binder is to link together the fibers in such a way that the fibrous layer can be properly handled and transported during the production of the flame shield according to the invention.

It is remarkable that the process used for the production of the porous fibrous non-woven according to the invention as well as its form have only a marginal influence on the effectiveness of the flame-resistant layer according to the invention. This makes the industrial production of the flame shield according to the invention easier, in particular in terms of materials sourcing. Provided the fibers comprised in the porous fibrous non-woven have a melting temperature of at least 1100°C and the fibrous non-woven is fully impregnated with polyurethane in such a way that it is impervious to air-flow, a flame-resistant layer with excellent flame shielding properties is obtained.

These excellent flame shielding properties are surprisingly obtained thanks to the synergy between the high-temperature resistance of the fibers comprised in the porous fibrous non-woven and the impregnation of the porous fibrous non-woven with a polyurethane according to the invention. On one side the fibers, besides giving dimensional stability to the flame-resistant layer according to the invention, may conduct the heat distributing it throughout the surface of the layer and act as an effective heat storage medium. On the other side, the polyurethane, by fully impregnating the fibrous non-woven in such a way to make the flame-resistant layer impervious to air-flow, avoids the propagation of a flame through the layer. Furthermore, by sticking to the fibrous weave, the polyurethane does not drip when molten under the action of a flame and quickly carbonizes, creating a char deposit around the fibers and on the surface of the layer that acts as a further heat storage medium.

In order to obtain this effect, it is essential that the polyurethane fully impregnates the porous fibrous non-woven, in such a way to make it impervious to air-flow, i.e. that the fibrous non-woven is soaked in the polyurethane, in such a way that the polyurethane blocks all the pores of the fibrous non-woven and tightly surrounds all the fibers comprised in it.

In a preferred embodiment, the polyurethane forming mixture does not comprise any blowing agent. The absence of any blowing agent avoids that the polyurethane impregnating the porous fibrous non-woven is in the form of a foam, thus reducing to a minimum or even eliminating the presence of air-bubbles in the polyurethane. Such air-bubbles may be detrimental to the performance of the flame-resistant layer according to the invention, since they may favour the propagation of the flame through the layer. By avoiding that the polyurethane is in the form of a foam, an improvement in the flame-shielding properties of the flame-resistant layer according to the invention is thus obtained.

Furthermore, thanks to the above-mentioned surprising effect, excellent flame shielding properties can be obtained with a polyurethane free of any flame retardant. This is indeed very advantageous. First of all, in general it makes the production of the flame shield according to the invention cheaper and industrially easier. Secondly, it allows avoiding all the undesirable side effects of flame retardants commonly used in commercial polyurethanes, whether they are additive flame retardants (i.e. flame retardants that are not chemically bonded to the polyurethane polymer) or reactive flame retardants (i.e. flame retardants chemically bound to the polyol used in the polyurethane forming mixture).

In fact, reactive flame retardants such as polyols containing halogens and/or phosphorus may pose toxicity/occupational health issues and the same applies also to some additive flame retardants such as TCPP (tris(1-chloro-2-propyl) phosphate) or TEP (triethyl-phosphate).

Furthermore, other additive flame retardants such as expandable graphite or ammonium phosphate typically used in commercial polyurethanes are of an intumescent nature, i.e. they expand under heat. This property makes them unsuitable for use in a flame shield to be applied on the battery side of a battery cover and/or of a battery tray of an electric vehicle since, by expanding, the flame retardant additive will reduce and might even fill the gap between the battery cover and/or battery tray and the battery cells, thus creating a dangerous short circuit between these elements.

All the above shows that, by avoiding the use of flame retardants, the flame-resistant layer according to the invention can indeed provide substantial advantages, while -surprisingly- keeping excellent flame shielding properties.

The flame shielding properties and performance of a flame-resistant layer according to the invention are preferably tested as follows. The flame source used for the test is a Bunsen burner equipped with a gas stopcock for regulating the gas supply and a controller for air regulation. The burner tube must have an inside diameter of (9.5±1.5)mm and a length of (90± 6)mm, without any flame stabilizer at the end of the tube. Commercially available propane or an equivalent gas is used as the fuel. Before the start of the test, the flame is regulated in such a way that the flame temperature at the tip of the flame and in the middle of the flame is (1000±100)°C. The flame temperature at the tip of the flame is measured at a distance of 57mm from the end of the burner tube, while the flame temperature in the middle of the flame is measured at a distance of 35mm from the end of the burner tube. Temperatures can be measured using a digital thermometer or another suitable device, such as a pyrometer or a thermocouple. A square flat specimen of the flame-resistant layer having size comprised between 250mm and 350mm is prepared and fixed in horizontal position in a specimen holder. The specimen holder may consist, e.g., of a metal frame in which the specimen is clamped along its boundary. The area of the specimen that is left exposed (i.e. not covered by the frame) must have a square shape, with a side having size of at least 200mm. The specimen is exposed to the flame of the Bunsen burner for a pre-defined time from one side (normally referred to as the "flame side"), by positioning it horizontally at a distance of 60mm from the end of the tube of the Bunsen burner, which must be aligned with the centre of the specimen. During the test, the flame temperature in the middle of the flame is measured and it is checked that it remains equal to (1000±100)°C. Furthermore, during the test, also the temperature of the specimen at the centre of the side opposite to the one exposed to the flame (normally referred to as the " cover side") is measured by means of any of the above-mentioned measurement devices (e.g. a digital thermometer or a thermocouple). The difference between the temperature in the middle of the flame and the temperature at the centre of the specimen on the cover side is hereafter referred to as "temperature drop" across the specimen. The higher is the temperature drop, the better is the performance of the flame-resistant layer.

The above described preferred test procedure will be hereafter referred to as "Bunsen-burner" test. This kind of test procedure may be advantageous since it allows testing the flame-shielding properties of flame shields to be used for batteries of electric vehicles on a relatively small specimen and with limited laboratory space and resources, thus avoiding the need of expensive and resource-consuming tests on entire flame shields or even entire battery covers equipped with flame shields.

The duration of the above-described Bunsen-burner test is at least 5 minutes, preferably at least 10 minutes and more preferably at least 15 minutes.

In order to enhance the protection guaranteed by the flame shield according to the invention during the time-to-escape, the temperature drop across a flame-resistant layer according to the invention measured in a Bunsen-burner test is at least 350°C, preferably at least 500°C and more preferably at least 600°C. By this, it is meant that such temperature drop is maintained during the whole duration of the test.

The fibers comprised in the porous fibrous non-woven according to the invention must be resistant to high temperatures, in particular they must have a melting temperature of at least 1100°C. In order to further enhance protection against fire, the fibers comprised in the fibrous non-woven according to the invention are preferably capable to resist for at least 5 minutes, preferably at least 10 minutes, even more preferably at least 15 minutes, to temperatures up to 1100°C, without burning and/or dripping.

According to one embodiment of the invention, the porous fibrous non-woven according to the invention may comprise one or more porous fibrous layers comprising staple fibers. Staple fibers are fibers cut to a specified length, as opposed to endless filaments, which are continuous fibres with indefinite length. Staple fibers comprised in the porous fibrous non-woven according to the invention have a length preferably comprised between 20mm and 80mm, more preferably comprised between 30mm and 70mm and even more preferably comprised between 40mm and 60mm.

In a preferred embodiment of the invention, the porous fibrous non-woven according to the invention may comprise one or more layers comprising fibers in the form of endless filaments. Endless filaments, hereafter referred to also as "continuous filaments" or simply "filaments", are continuous fibres with indefinite length, i.e. not cut to a specific length like staple fibers. Thanks to endless filaments, a more homogeneous distribution of the fibers over the surface of the layer may be obtained, in particular when the flame-resistant layer has a substantially non-planar shape, with areas having strong three-dimensional curvature.

In addition, when the porous fibrous non-woven according to the invention comprises one or more layers comprising endless filaments the mechanical strength and stiffness of the flame-resistant layer according to the invention may be improved, in particular bending stiffness and bending strength. These improved mechanical properties derive from the synergy between the endless nature of the filaments and the bonding between them guaranteed by the polyurethane by which they are impregnated. In fact, on one hand, endless filaments span the whole surface of the flame-resistant layer. On the other hand, the polyurethane guarantees a bonding between the endless filaments, uniformly distributed along the whole length of the filaments themselves. The result is a network of endless filaments spanning the whole surface of the flame-resistant layer and strongly linked to each other. Such a network has excellent mechanical properties, in particular in terms of bending stiffness and bending strength.

The porous fibrous non-woven according to the invention may comprise one or more fibrous layers comprising inorganic fibers or fibers made from inorganic materials, such as glass fibers, carbon fibers, basalt fibers, aramid fibers or a mixture thereof. Preferably, a fibrous layer comprised in the porous fibrous non-woven and comprising inorganic fibers comprises at least 70% by weight, more preferably at least 80% by weight, even more preferably at least 90% by weight of inorganic fibers.

In a preferred embodiment, the porous fibrous non-woven according to the invention comprises one or more layers comprising E-glass fibers, which may partially or totally overlap each other. The E-glass fibers may resist thermal expansion, which may provide dimensional stability to the layer in presence of the temperature fluctuations that may take place over the lifetime of the battery. The E-glass fibers may also provide high mechanical strength and stiffness at low weight and they may exhibit at the same time low values for dielectric constant, dielectric loss, or both. The E-glass fibers may include any of silica, alumina, calcium oxide and boron oxide.

In a further preferred embodiment, the E-glass fibers may be free of boron oxide. Such boron-free material is referred to as E-CR glass. The E-CR glass may provide acid and/or chemical resistance. The E-CR glass may also provide enhanced temperature resistance.

Layers comprising E-glass and/or E-CR glass fibers may be formed by any suitable process known in the art, including -but not limited to- needle punching, air-laying, wet-laying.

In a particularly preferred embodiment, the fibrous non-woven comprises one or more layers of E-glass fibers, wherein each layer is in the form of a chopped-strand-mat consisting of E-glass staple fibers bound together by minor amount of a thermoset binder, preferably less than 10% by weight, more preferably less than 5% by weight of thermoset binder. The thermoset binder is preferably a phenolic-based or an epoxy-based polyester resin. In this embodiment, the E-glass staple fibers have preferably a length between 20mm and 80mm, more preferably between 30mm and 70mm, even more preferably between 40mm and 60mm.

In another preferred embodiment, the porous fibrous non-woven according to the invention may include one or more layers essentially consisting of a blanket of ceramic fibers (hereafter referred to as "ceramic blanket"). The ceramic blanket layer may provide improved handling strength, enhanced thermal properties, or both. The ceramic blanket layer may have excellent thermal stability, good flexibility, easiness to cut and shape. The ceramic blanket may have also good resistance to tearing. The ceramic blanket layer may be formed by any suitable process, including but not limited to needle punching.

The ceramic blanket may be substantially free of binder (e.g., about 1 % by weight or less of the layer) or even entirely free of binder. The ceramic blanket may be formed of inorganic materials in an amount up to and including about 100% by weight of the layer. For example, the ceramic blanket may comprise silicon dioxide, calcium oxide, and magnesium oxide.

The porous fibrous non-woven according to the invention may comprise one or more layers of fiberglass, which may impart to the flame-resistant layer according to the invention high temperature resistance and thermal stability, resistance to abrasion, tearing and chemical solvents.

The fibrous non-woven may also comprise one or more layers comprising organic fibers. A layer comprising organic fibers may comprise preferably at least 50% by weight of organic fibers, more preferably at least 75% by weight of organic fibers. In a preferred embodiment, the fibers may be formed of or include an organic synthetic thermoplastic polymer resin. For example, the fibers may be polyacrylonitrile fibers. The polyacrylonitrile fibers may be oxidized polyacrylonitrile fibers, such as Ox-PAN, OPAN, or PANOX.

The fibers comprised in the porous fibrous non-woven according to the invention may be virgin and/or they may originate from recycling processes, which may be post-industrial or post-consumer recycling processes.

For example, glass fibers comprised in the porous fibrous non-woven according to the invention may originate from the end-of-life treatment of GFRP (Glass Fiber Reinforced Polymer) products such as aircraft and boats body panels, thanks to thermal (e.g. fluidised bed processing) and/or chemical processes that allow the glass-fibers to be separated from the polymeric matrix and to be recycled. In another example, glass fibers comprised in the porous fibrous non-woven according to the invention may be produced by recycling post-industrial glass waste.

Very surprisingly, the desired flame-shielding effect may be obtained already with a very thin and lightweight flame-resistant layer. The flame-resistant layer according to the invention has a density preferably comprised between 800kg/m³ and 1800kg/m³, more preferably comprised between 1000kg/m³ and 1500kg/m³. These density values are substantially smaller than the density of mica, which is the material normally used in the art for flame shields for batteries of electric vehicles. In comparison with prior art flame shields, the flame shield according to the invention thus allows a reduction of weight of electric vehicles and, as a consequence, also an enhancement of their driving range, a feature very much required by end-consumers interested in this kind of vehicles.

Preferably, the flame-resistant layer according to the invention has a thickness comprised between 0.5mm and 7mm, more preferably between 0.5mm and 5mm and even more preferably between 1mm and 3mm. Thus, the flame shield according to the invention may be realized at the price of an almost negligible packaging space. This may be particularly advantageous, considering the very limited space typically available inside the battery case enclosing a battery for an electric vehicle, in particular the space between the battery cover and the battery cells wherein the flame shield may be positioned.

The flame shield according to the invention may be produced with methods known in the art. A preferred production process goes through the following steps:
1. Provide a porous fibrous non-woven wherein the fibers comprised in the fibrous non-woven have a melting temperature of at least 1100°C;
2. Spread a polyurethane-forming mixture free of any flame retardants on the porous fibrous non-woven. The polyurethane-forming mixture, following the mixing of the polyol and the isocyanate components, is typically in the form of a viscous fluid, that may be easily poured onto the porous fibrous non-woven, e.g. by means of a mixing head. The polyurethane-forming mixture may be mixed and dosed immediately before spreading it on the porous fibrous non-woven. Additives might be added to the polyol or isocyanate components before mixing or during the mixing phase;
3. Transfer the porous fibrous non-woven with polyurethane-forming mixture spread on it obtained at point 2 inside a mould heated at a temperature of 40 to 200°C, wherein the cavity of the mould has the shape desired for the flame shield;
4. Hot-press the material stack transferred into the heated mould by closing the mould and keeping it closed under pressure, with a clamping force of 100 to 2000 tons. The heat of the mould will (further) activate the polyurethane mixture creating a pressure that will make the polyurethane impregnate the porous fibrous non-woven, by spreading around the fibers and through the pores of the porous fibrous non-woven;
5. De-mould and optionally trim the edges.

In a variant of the above-described process, the spreading of the polyurethane-forming mixture onto the porous fibrous non-woven may take place directly inside the heated mould. This may be advantageous, since it may reduce the space and the time needed to produce the flame-shield according to the invention.

As already mentioned, this process is remarkably simple, when compared to the process needed to produce prior art flame shields based on mica layers. Thanks to the above-described process, a flame shield according to the invention and consisting of only one flame-resistant layer may be obtained. Quite obviously, this process may be extended to the case in which the flame shield according to the invention comprises more than one flame-resistant layer.

Remarkably, by means of the above-described process it is possible to obtain flame-resistant layers having a three-dimensional shape, i.e. a shape that substantially deviates from a planar one. This design flexibility is a consequence of the flame-resistant layer constituents, i.e. the porous fibrous non-woven and the polyurethane, both having high formability properties. This is advantageous compared to prior art flame shields based on mica layers, with which it may be not possible to follow the shape of battery covers having strong curvatures, due to the brittleness of mica.

A further aspect of the invention concerns a battery housing or battery case for a battery of an electric vehicle, in particular a lithium-ion battery, which comprises a battery cover and a battery tray, wherein the battery cover and/or the battery tray comprises a flame shield according to the invention. The flame shield is generally applied on the battery cover and/or on the battery tray on the side facing the battery.

The design flexibility of the flame shield according to the invention allows following the shape of the battery cover and/or of the battery tray even in areas where this shape is far from being planar, e.g. it presents strong curvatures and/or features such as beads, embossments, etc. This may be advantageous in order to maximize the degree of coverage of the flame shield according to the invention and thus its effectiveness.

The degree of coverage of the flame shield is the ratio between the area of the battery cover/battery tray side facing the battery that is covered by the flame shield and the total area of this same side. This ratio is hereafter expressed in percentage.

Furthermore, in the battery housing according to the invention, the flame shield according to the invention may be applied on the battery cover and/or on the battery tray in one single piece or in patches, depending on design needs.

Preferably, in order to enhance the flame-shielding properties of the flame shield according to the invention, the degree of coverage of the flame shield according to the invention is at least 50%, more preferably at least 60%, even more preferably at least 70%.

Any range given throughout this description should include the starting and end points as well as normal expected deviations in the measurements. Start and end-point values of different ranges may be combined.

Further embodiments of the invention may be derived from the description also by combining the different embodiments and examples of the invention and may be also derived from the description of the embodiments shown in the figures. The figures are schematic and not necessarily in scale.

### Brief description of drawings

Figures 1a and 1b show a flame shield according to the invention.
Figure 2 describes a typical process that may be used to produce it.
Figure 3 outlines the Bunsen-burner test
Figure 4 displays a battery case according to the invention.

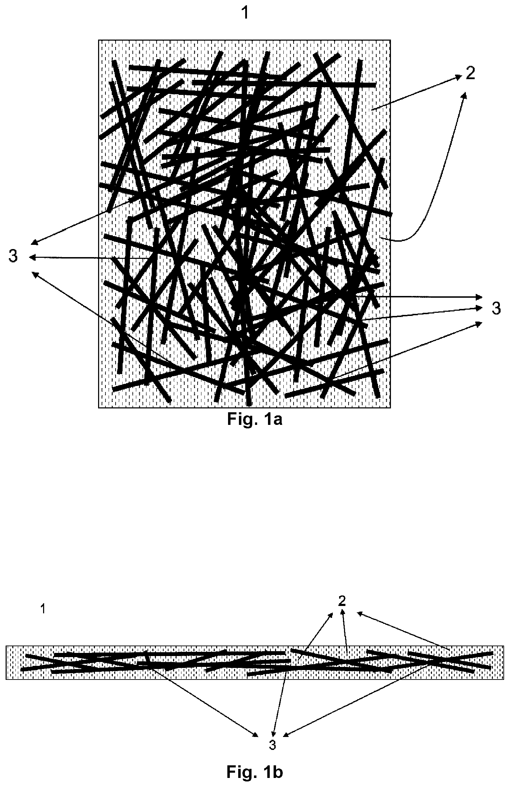

Figures 1a and 1b show a flame shield (1) according to the invention in its simplest embodiment, which consists in a substantially flat flame-resistant layer consisting of a porous fibrous non-woven (3) fully impregnated with polyurethane (2) according to the invention. Figure 1a is a top view of the flame shield, while Figure 1b shows a representative section. As it is visible in these Figures, the polyurethane fully surrounds the fibers of the porous fibrous non-woven and blocks its pores in such a way to make the flame-resistant layer impervious to air-flow. Preferably no fiber ends are sticking out of at least the surface facing the potential fire source.

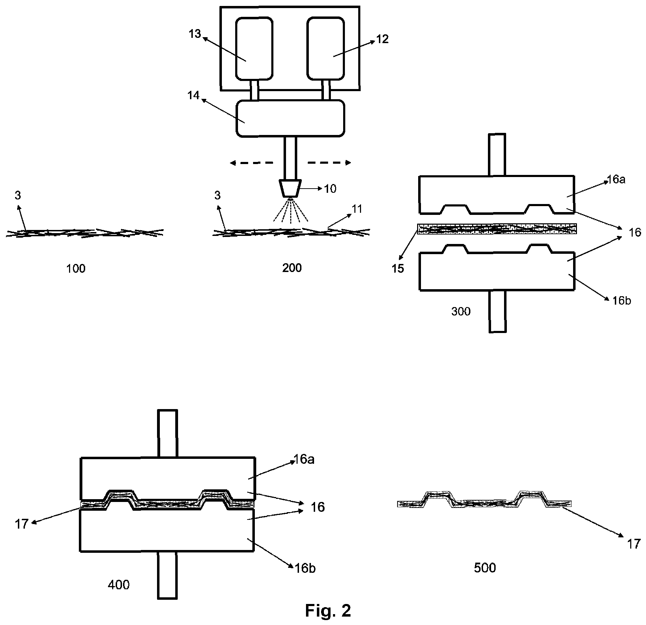

Figure 2 schematically shows the main steps in a preferred production process for the flame shield according to the invention, which consist in:
- in a first step (100), a porous fibrous non-woven (3) is provided;
- in a second step (200), a polyurethane-forming mixture free of any flame retardants is spread on the porous fibrous non-woven (3) by means of one or more polyurethane mixing heads (10) that can move in relation to the porous fibrous non-woven (3) and to the surface on which the mixture must be poured (11). The polyurethane mixture may be mixed and dosed immediately before spraying for instance using a first dosing system for the isocyanate (12) and a second dosing system for the polyol (13) into a mixing unit (14). Additives might be added to the stock or directly to the mixing unit;
- In a third step (300), the porous fibrous non-woven with the polyurethane-forming mixture spread on it (15) is transferred inside a mould (16) heated at a temperature between 40°C and 200°C, wherein the mould comprises a first and second mould half (16a) and (16b), that can be closed together forming a cavity in between that has the shape desired for the flame shield;
- In a fourth step (400), the part (17) is moulded by closing the mould and keeping it closed under pressure. The heat of the mould will (further) activate the polyurethane mixture creating a foam pressure that will help the mixture impregnate the porous fibrous non-woven, spreading the mixture around the fibers and through the pores of the porous fibrous non-woven;
- In a fifth step (500) the final part (17) is de-moulded from the tool and possibly trimmed.

Five different flame shields according the invention, and more specifically according to the embodiment shown in Figure 1, were produced following the process outlined in Figure 2.

The first flame shield according to the invention consists of a single flame-resistant layer consisting of an E-glass fibers chopped-strand-mat having an area weight of 450g/m² impregnated with polyurethane obtained by a polyurethane-forming mixture comprising a polyol component with an average OH number of approximately 700 and an MDI isocyanate. The glass fibers comprised in the E-glass fibers chopped strand-mat used for the first flame-resistant layer according to the invention have a melting temperature of about 1135°C. The polyurethane is free of any flame retardant. The resulting flame shield has a thickness of only 0.8mm, a density of 1036kg/m³ and an area weight of approximately 830g/m². The size of the flame shield was approximately 300mm x 300mm.

The second flame shield according to the invention is obtained in a way analogous to the first flame shield according to the invention, being the only difference the fact that the porous fibrous non-woven consists in two superimposed E-glass fibers chopped strand-mats having a total area weight of approximately 900g/m². The resulting flame shield has a thickness of 1.4mm, a density of 1158kg/m³ and an area weight of approximately 1620g/m².

The third flame shield according to the invention is obtained in a way analogous to the first flame shield according to the invention, being the only difference the fact that the porous fibrous non-woven consists in three superimposed E-glass fibers chopped strand-mats having a total area weight of approximately 1350g/m². The resulting flame shield has a thickness of 1.6mm, a density of 1393kg/m³ and an area weight of approximately 2230g/m².

The fourth flame shield according to the invention is obtained in a way analogous to the first flame shield according to the invention, being the only difference the fact that the porous fibrous non-woven consists in four superimposed E-glass fibers chopped strand-mats having a total area weight of approximately 1800g/m². The resulting flame shield has a thickness of 1.8mm, a density of 1520kg/m³ and an area weight of approximately 2740g/m².

The fifth flame shield according to the invention is obtained in a way analogous to the first flame shield according to the invention, being the only difference the fact that the porous fibrous non-woven consists in five superimposed E-glass fibers chopped strand-mats having a total area weight of approximately 2250g/m². The resulting flame shield has a thickness of 2.3mm, a density of 1471kg/m³ and an area weight of approximately 3383g/m².

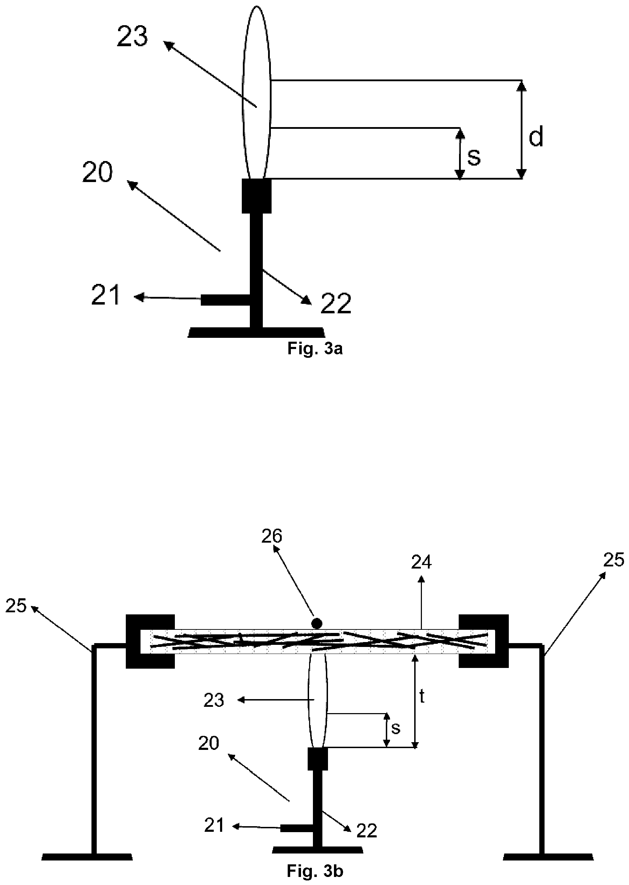

The flame shielding properties of the five flame shields according to the invention were tested according to the "Bunsen-burner" test procedure, sketched in Figures 3a and 3b. The Bunsen-burner (20) used for the tests has a stopcock (21) for regulating the gas supply and a controller for air regulation. The burner tube (22) has an inside diameter of approximately 9.5mm and a length of approximately 90mm. Commercially available propane is used as the fuel.

For the test on the first flame shield according to the invention, the Bunsen burner flame (23) was regulated in such a way that its temperature at the tip of the flame before the start of the test was about 1060°C and the temperature in the mid of the flame before the start of the test was about 1040°C. The flame temperature at the tip of the flame is measured at a distance d=57mm from the end of the burner tube, while the flame temperature in the middle of the flame is measured at a distance s=35mm from the end of the burner tube. Temperatures were measured using a thermocouple. A specimen (24) of the first flame shield according to the invention was fixed in a horizontal position in a specimen holder (25) in such a way to leave exposed an area having size approximately 250mm x 250mm. Then it was positioned horizontally on top of the flame (being the flame aligned with the centre of the exposed area) at a distance t=60mm from the end of the Bunsen burner tube. During the test, the flame temperature in the mid of the flame was measured with a thermocouple and it remained always between 1040°C and 1050°C. Furthermore, during the test, also the temperature of the flame shield on the side (24) opposite to the one exposed to the flame (normally referred to as the "cover side") was measured at the centre (26) of the flame shield by means of a thermocouple. The test lasted 10 minutes. The maximum temperature recorded during the test at the centre of the flame shield according to the invention on the cover side was approximately 622°C. The temperature drop (difference between temperature in the mid of the flame and temperature at the centre of the sample on the cover side) was measured during the 10 minutes of the test and it always remained above approximately 422°C.

For the test on the second, the third, the fourth and the fifth flame shields according to the invention an analogous procedure was followed. The Bunsen burner flame (23) was regulated in such a way that its temperature at the tip of the flame before the start of the test was about 1080°C and the temperature in the mid of the flame before the start of the test was about 1090°C. During the test, which lasted 10 minutes, the temperature in the mid of the flame was measured and remained always approximately 1090°C.

For the second flame shield according to the invention, the maximum temperature recorded during the test at the centre of the flame shield according to the invention on the cover side was about 535°C. The temperature drop was measured during the 10 minutes of the test and it always remained above about 555°C.

For the third flame shield according to the invention, the maximum temperature recorded during the test at the centre of the flame shield according to the invention on the cover side was about 507°C. The temperature drop was measured during the 10 minutes of the test and it always remained above about 583°C.

For the fourth flame shield according to the invention, the maximum temperature recorded during the test at the centre of the flame shield according to the invention on the cover side was about 454°C. The temperature drop was measured during the 10 minutes of the test and it always remained above about 636°C.

For the fifth flame shield according to the invention, the maximum temperature recorded during the test at the centre of the flame shield according to the invention on the cover side was about 400°C. The temperature drop was measured during the 10 minutes of the test and it always remained above about 690°C.

As one can see from these data, all flame shields according to the invention have excellent flame shielding properties, providing a temperature drop of at least 350°C for a time of at least 10 minutes in spite of their small thickness (varying between 0.8mm and 2.3mm) and area weight (varying between 830g/m² and 3383g/m²). During the test, it was observed how the polyurethane, which fully impregnates the porous fibrous non-woven in such a way to make the flame shield impervious, creates a barrier to the flame and quickly carbonizes forming a char deposit around the fibers and on the surface of the flame shield according to the invention. All flame shields according to the invention could sustain the Bunsen burner test for 10 minutes without any showing any burning, softening or dripping of the fibers and/or of the polyurethane therein comprised. Furthermore, no substantial deformation of the flame shield was observed, thanks to the dimensional stability guaranteed by the porous fibrous non-woven used. This kind of performance shows how the flame shields according to the invention are suitable to mitigate the consequences of a thermal runaway and protect the passenger compartment during the time-to-escape.

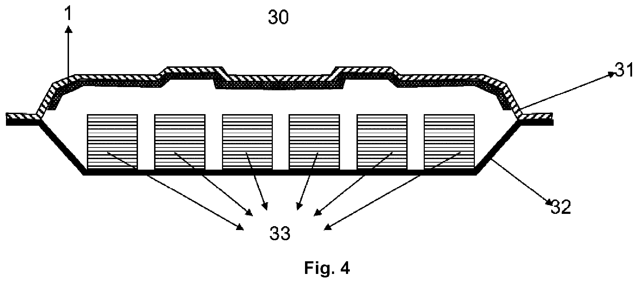

Figure 4 shows a housing for a battery for an electric vehicle (30) according to the invention, together with the battery comprised in it. The battery housing comprises a battery cover (or battery lid) (31) and battery tray (32). The battery consists of a number of battery cells (33). In the embodiment shown in Figure 4, a flame shield according to the invention (1) is applied on the battery cover on the side facing the battery and it covers it over almost all its entire extent, even in areas having strong curvature and in areas with beads. The possibility of such a good and safe coverage is a consequence of the fact that both basic constituents of the flame shield according to the invention have an excellent design flexibility. Such a good and safe coverage would be difficult, if not impossible, with prior art flame shields based on mica plates, due to their tendency to cleave and/or break.

In the embodiment shown in Figure 4, the flame shield according to the invention (1) covers only the battery cover (31). In other embodiments not shown here the flame shield according to the invention may be applied only on the battery tray (32) or both on the battery cover (31) and on the battery tray (32).

## Claims

1. A flame shield (1) for a battery of an electric vehicle, in particular a lithium-ion battery, **characterized in that** it comprises at least one flame-resistant layer that is able to maintain a temperature drop of at least 350° C, more preferably at least 500° C and even more preferably at least 600° C in a Bunsen-burner test as described herein, lasting 5 minutes and whereby the flame resistant layer consists of a porous fibrous non-woven (3) impregnated with polyurethane (2), wherein the fibers comprised in the porous fibrous non-woven (3) have a melting temperature of at least 1100° C, wherein the polyurethane does not comprise any flame retardant and wherein the polyurethane impregnates the porous fibrous-non woven in such a way that the flame-resistant layer is impervious to air-flow.

2. A flame shield for a battery of an electric vehicle according to any of the preceding claims, **characterized in that** the at least one flame-resistant layer maintains a temperature drop of at least 350° C, more preferably at least 500° C and even more preferably at least 600° C in a Bunsen-burner test lasting 10 minutes.

3. A flame shield for a battery of an electric vehicle according to any of the preceding claims, **characterized in that** the at least one flame-resistant layer maintains a temperature drop of at least 350° C, more preferably at least 500° C and even more preferably at least 600° C in a Bunsen-burner test lasting 15 minutes.

4. A flame shield according to any of the preceding claims, wherein the thickness of the flame-resistant layer is comprised between 0.5mm and 7mm, more preferably between 0.5mm and 5mm and even more preferably between 1mm and 3mm.

5. A flame shield according to any of the preceding claims, wherein the density of the flame-resistant layer is comprised between 800kg/m³ and 1800kg/m³, more preferably comprised between 1000kg/m³ and 1500kg/m³.

6. A flame shield according to any of the preceding claims, wherein the weight of the porous fibrous non-woven (3) is between 40% and 80% of the total weight of the flame-resistant layer, preferably between 50% and 70%.

7. A flame shield according to any of the preceding claims, wherein the porous fibrous non-woven (3) comprises endless filaments.

8. A flame shield according to any of claims 1-6, wherein the porous fibrous non-woven (3) comprises staple fibers having a length preferably comprised between 20mm and 80mm, more preferably comprised between 30mm and 70mm and even more preferably comprised between 40mm and 60mm.

9. A flame shield according to any of the preceding claims wherein the porous fibrous non-woven comprises fibers bonded by means of a thermoset binder before being impregnated with the polyurethane, preferably an epoxy or phenolic based binder.

10. A flame shield according to any of the preceding claims, wherein the fibers of the porous fibrous non-woven (3) comprise at least one of ceramic fibers, glass fibers, carbon fibers, mineral-based fibers, oxidized polyacrylonitrile fibers.

11. A flame shield according to any of the preceding claims, wherein the polyurethane (2) is obtained from the reaction of a polyurethane-forming-mixture that does not contain any blowing agent.

12. A process for making a flame shield according to any of the preceding claims, consisting at least in the following steps:
- provide a porous fibrous non-woven wherein the fibers comprised in the fibrous non-woven have a melting temperature of at least 1100° C;
- spread a polyurethane-forming mixture free of any flame retardants onto the porous fibrous non-woven. The polyurethane mixture may be mixed and dosed immediately before spraying. Additives might be added to the stock or directly to the mixing unit;
- transfer the porous fibrous non-woven spread with the polyurethane-forming mixture inside a mould heated at a temperature of 40° C to 200° C, wherein the cavity of the mould has the shape desired for the flame shield;
- hot-press the material transferred into the heated mould by closing the mould and keeping it closed under pressure, with a clamping force of 100 to 2000 tons. The heat of the mould will (further) activate the polyurethane-forming mixture creating a pressure that will make the polyurethane spread around the fibers and through the pores of the porous fibrous non-woven;
- de-mould and optionally trim the edges.

13. Housing for a battery of an electric vehicle (30) comprising a battery cover (31) and a battery tray (32), wherein the battery cover (31) and/or the battery tray (32) comprises a flame shield according to any of claims 1 to 11.

14. Housing for a battery of an electric vehicle (30) according to claim 13, wherein the degree of coverage of the flame shield is at least 50%, more preferably at least 60%, even more preferably at least 70%.

## Patentansprüche

1. Flammenschutzschild (1) für eine Batterie eines Elektrofahrzeugs, insbesondere eine Lithium-Ionen-Batterie, **dadurch gekennzeichnet, dass** es mindestens eine flammbeständige Schicht umfasst, die in der Lage ist, einem Temperaturabfall von mindestens 350°C, bevorzugter mindestens 500°C und noch bevorzugter mindestens 600°C in einem wie hier beschriebenen Bunsenbrenner Test über 5 Minuten standzuhalten, wobei die flammbeständige Schicht aus einem mit Polyurethan (2) imprägnierten porösen Faservlies (3) besteht, wobei die in dem porösen Faservlies (3) umfassten Fasern eine Schmelztemperatur von mindestens 1100°C aufweisen, wobei das Polyurethan kein Flammschutzmittel umfasst und wobei das Polyurethan das poröse Faservlies derart imprägniert, dass die flammbeständige Schicht für einen Luftstrom undurchlässig ist.

2. Flammenschutzschild für eine Batterie eines Elektrofahrzeugs nach einem der vorstehenden Ansprüche, **dadurch gekennzeichnet, dass** die mindestens eine flammbeständige Schicht einem Temperaturabfall von mindestens 350° C, bevorzugter mindestens 500° C und noch bevorzugter mindestens 600° C einem Bunsenbrenner Test über 10 Minuten standhält.

3. Flammenschutzschild für eine Batterie eines Elektrofahrzeugs nach einem der vorstehenden Ansprüche, **dadurch gekennzeichnet, dass** die mindestens eine flammbeständige Schicht einen Temperaturabfall von mindestens 350° C, bevorzugter mindestens 500° C und noch bevorzugter mindestens 600° C einem Bunsenbrenner Test über 15 Minuten standhält.

4. Flammenschutzschild nach einem der vorstehenden Ansprüche, wobei die Dicke der flammbeständigen Schicht zwischen 0,5 mm und 7 mm, bevorzugter zwischen 0,5 mm und 5 mm und noch bevorzugter zwischen 1 mm und 3 mm beträgt.

5. Flammenschutzschild nach einem der vorstehenden Ansprüche, wobei die Dichte der flammbeständigen Schicht zwischen 800 kg/m³ und 1800 kg/m³, bevorzugter zwischen 1000 kg/m³ und 1500 kg/m³ beträgt.

6. Flammenschutzschild nach einem der vorstehenden Ansprüche, wobei das Gewicht des porösen Faservlieses (3) zwischen 40% und 80% des Gesamtgewichts, bevorzugt zwischen 50% und 70% der flammbeständigen Schicht beträgt.

7. Flammenschutzschild nach einem der vorstehenden Ansprüche, wobei das poröse Faservlies (3) Endlosfilamente umfasst.

8. Flammenschutzschild nach einem der Ansprüche 1-6, wobei das poröse Faservlies (3) Stapelfasern umfasst, die eine Länge aufweisen, die bevorzugt zwischen 20 mm und 80 mm, bevorzugter zwischen 30 mm und 70 mm und noch bevorzugter zwischen 40 mm und 60 mm beträgt.

9. Flammenschutzschild nach einem der vorstehenden Ansprüche, wobei das poröse Faservlies Fasern umfasst, die mittels eines duroplastischen Bindemittels, vorzugsweise einem Bindemittel auf Epoxid- oder Phenolbasis, gebunden werden, bevor sie mit dem Polyurethan imprägniert werden.

10. Flammenschutzschild nach einem der vorstehenden Ansprüche, wobei die Fasern des porösen Faservlieses (3) mindestens eine von Keramikfasern, Glasfasern, Kohlenstofffasern, Fasern auf mineralischer Basis, oxidierten Polyacrylnitrilfasern umfassen.

11. Flammenschutzschild nach einem der vorstehenden Ansprüche, wobei das Polyurethan (2) aus der Reaktion eines Polyurethan-bildenden Gemisches gewonnen wird, das kein Treibmittel enthält.

12. Verfahren zum Herstellen eines Flammenschutzschildes nach einem der vorstehenden Ansprüche, das mindestens aus den folgenden Schritten besteht:
- Bereitstellen eines porösen Faservlieses, wobei die in dem Faservlies umfassten Fasern eine Schmelztemperatur von mindestens 1100° C aufweisen;
- Auftragen eines Polyurethan-bildenden Gemisches ohne jegliche Flammschutzmittel auf das poröse Faservlies. Das Polyurethangemisch kann unmittelbar vor einem Aufsprühen gemischt und dosiert werden. Additive können dem Ausgangsmaterial oder direkt der Mischeinheit zugegeben werden;
- Transport und Positionierung des mit dem Polyurethan bildenden Gemisch beaufschlagten porösen Faservlieses in ein 40°C bis 200°C erhitztes Formwerkzeug, wobei die Formgebung die gewünschte Bauteilform aufweist;
- Heißpressen des in das erhitzte Formwerkzeug übertragenen Materials, indem die Form geschlossen und unter Druck, mit einer Klemmkraft von 100 bis 2000 Tonnen, geschlossen gehalten wird, durch die Hitze der Form wird das Polyurethanbildende Gemisch (weiter) aktiviert, wodurch ein Druck entsteht, der dazu führt, dass das Polyurethan sich um die Fasern legt und durch die Poren des porösen Faservlieses in das Material eingetragen wird;
- Entformen und optional Nachschneiden der Kanten.

13. Gehäuse für eine Batterie eines Elektrofahrzeugs (30), umfassend eine Batterieabdeckung (31) und einen Batterietrog (32), wobei die Batterieabdeckung (31) und/oder der Batterietrog (32) ein Flammenschutzschild nach einem der Ansprüche 1 bis 11 umfasst.

14. Gehäuse für eine Batterie eines Elektrofahrzeugs (30) nach Anspruch 13, wobei der Abdeckungsgrad des Flammenschutzschildes mindestens 50%, bevorzugter mindestens 60%, noch bevorzugter mindestens 70% beträgt.

## Revendications

1. Ecran pare-flammes (1) pour une batterie d'un véhicule électrique, en particulier une batterie lithium-ion, **caractérisé en ce qu'**il comprend au moins une couche ignifuge qui est capable de maintenir une chute de température d'au moins 350 °C, plus préférentiellement d'au moins 500 °C et encore plus préférentiellement d'au moins 600 °C lors d'un test au bec Bunsen tel que décrit ici, d'une durée de 5 minutes et selon lequel la couche ignifuge consiste en un non-tissé fibreux poreux (3) imprégné de polyuréthane (2), dans lequel les fibres comprises dans le non-tissé fibreux poreux (3) présentent une température de fusion d'au moins 1100 °C, dans lequel le polyuréthane ne comprend aucun retardateur de flamme et dans lequel le polyuréthane imprègne le non-tissé fibreux poreux de telle manière que la couche ignifuge est imperméable au flux d'air.

2. Ecran pare-flammes pour une batterie d'un véhicule électrique selon l'une quelconque des revendications précédentes, **caractérisé en ce qu'**au moins une couche ignifuge maintient une chute de température d'au moins 350 °C, plus préférentiellement d'au moins 500 °C et encore plus préférentiellement d'au moins 600 °C lors d'un test au bec Bunsen d'une durée de 10 minutes.

3. Ecran pare-flammes pour une batterie d'un véhicule électrique selon l'une quelconque des revendications précédentes, **caractérisé en ce qu'**au moins une couche ignifuge maintient une chute de température d'au moins 350 °C, plus préférentiellement d'au moins 500 °C et encore plus préférentiellement d'au moins 600 °C lors d'un test au bec Bunsen d'une durée de 15 minutes.

4. Ecran pare-flammes selon l'une quelconque des revendications précédentes, dans lequel l'épaisseur de la couche ignifuge est comprise entre 0,5 mm et 7 mm, plus préférentiellement entre 0,5 mm et 5 mm et encore plus préférentiellement entre 1 mm et 3 mm.

5. Ecran pare-flammes selon l'une quelconque des revendications précédentes, dans lequel la densité de la couche ignifuge est comprise entre 800 kg/m³ et 1800 kg/m³, plus préférentiellement comprise entre 1 000 kg/m³ et 1 500 kg/m³.

6. Ecran pare-flammes selon l'une quelconque des revendications précédentes, dans lequel le poids du non-tissé fibreux poreux (3) est compris entre 40 % et 80 % du poids total de la couche ignifuge, de préférence entre 50 % et 70 %.

7. Ecran pare-flammes selon l'une quelconque des revendications précédentes, dans lequel le non-tissé fibreux poreux (3) comprend des filaments sans fin.

8. Ecran pare-flammes selon l'une quelconque des revendications 1-6, dans lequel le non-tissé fibreux poreux (3) comprend des fibres discontinues présentant une longueur de préférence comprise entre 20 mm et 80 mm, plus préférentiellement comprise entre 30 mm et 70 mm et encore plus préférentiellement comprise entre 40 mm et 60 mm.

9. Ecran pare-flammes selon l'une quelconque des revendications précédentes, dans lequel le non-tissé fibreux poreux comprend des fibres liées au moyen d'une résine thermodurcissable avant d'être imprégnées du polyuréthane, de préférence une résine à base d'époxy ou de phénolique.

10. Ecran pare-flammes selon l'une quelconque des revendications précédentes, dans lequel les fibres du non-tissé fibreux poreux (3) comprennent au moins l'une des fibres céramiques, des fibres de verre, des fibres de carbone, des fibres à base minérale, des fibres de polyacrylonitrile oxydées.

11. Ecran pare-flammes selon l'une quelconque des revendications précédentes, dans lequel le polyuréthane (2) est obtenu à partir de la réaction d'un mélange de formation de polyuréthane qui ne contient aucun agent gonflant.

12. Procédé de fabrication d'un écran pare-flammes selon l'une quelconque des revendications précédentes, consistant au moins en les étapes suivantes :
- la fourniture d'un non-tissé fibreux poreux dans lequel les fibres comprises dans le non-tissé fibreux présentent une température de fusion d'au moins 1100 °C ;
- l'étalement d'un mélange de formation de polyuréthane exempt de tout retardateur de flamme sur le non-tissé fibreux poreux. Le mélange de polyuréthane peut être mélangé et dosé immédiatement avant la pulvérisation. Les additifs peuvent être ajoutés au stock ou directement à l'unité de mélange ;
- le transfert du non-tissé fibreux poreux étalé avec le mélange de formation de polyuréthane à l'intérieur d'un moule chauffé à une température de 40 °C à 200 °C, dans lequel la cavité du moule présente la forme souhaitée pour l'écran pare-flammes ;
- le pressage à chaud du matériau transféré dans le moule chauffé en fermant le moule et en le maintenant fermé sous pression, avec une force de serrage de 100 à 2 000 tonnes. La chaleur du moule va (en outre) activer le mélange de formation de polyuréthane en créant une pression qui fera que le polyuréthane se répandra autour des fibres et à travers les pores du non-tissé fibreux poreux ;
- le démoulage et éventuellement la coupe des bords.

13. Boîtier pour une batterie d'un véhicule électrique (30) comprenant un couvercle de batterie (31) et un plateau de batterie (32), dans lequel le couvercle de batterie (31) et/ou le plateau de batterie (32) comprend un pare-flammes selon l'une quelconque des revendications 1 à 11.

14. Boîtier pour une batterie d'un véhicule électrique (30) selon la revendication 13, dans lequel le degré de couverture du pare-flammes est d'au moins 50 %, plus préférentiellement d'au moins 60 %, encore plus préférentiellement d'au moins 70 %.
